(19) **Europäisches Patentamt**
**European Patent Office**
**Office européen des brevets**

(11) **EP 4 293 894 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(51) Internationale Patentklassifikation (IPC):
*H02P 6/15* (2016.01) *H02P 6/185* (2016.01)

(52) Gemeinsame Patentklassifikation (CPC):
**H02P 6/185; H02P 6/15**

(21) Anmeldenummer: **23207510.1**

(22) Anmeldetag: **25.03.2022**

(54) **VERFAHREN UND VORRICHTUNG ZUR BEREITSTELLUNG EINES KOMMUTIERUNGSINTERVALLS**

METHOD AND DEVICE FOR DETERMINING AN INITIAL ROTOR POSITION OF A THREE-PHASE ELECTRIC MOTOR

PROCÉDÉ ET DISPOSITIF DE DÉTERMINATION D'UNE POSITION INITIALE DE ROTOR D'UN MOTEUR ÉLECTRIQUE TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2021 DE 102021203236**
**30.03.2021 DE 102021203222**
**15.04.2021 DE 102021203758**

(43) Veröffentlichungstag der Anmeldung:
**20.12.2023 Patentblatt 2023/51**

(62) Dokumentnummer(n) der früheren Anmeldung(en) nach Art. 76 EPÜ:
**22718194.8 / 4 289 060**

(73) Patentinhaber: **Elmos Semiconductor SE**
**44227 Dortmund (DE)**

(72) Erfinder:
• **BERNHARDT, Jan**
**01127 Dresden (DE)**
• **KRUPAR, Jörg**
**01833 Stolpen (DE)**

(74) Vertreter: **Tautz & Schuhmacher**
**Nibelungenstraße 84**
**80639 München (DE)**

(56) Entgegenhaltungen:
WO-A2-2009/047217 DE-A1- 10 220 077
DE-A1- 10 221 385 DE-A1- 102016 123 707
DE-A1- 102016 123 715 DE-A1- 102019 127 051

**Beschreibung**

Die vorliegende Erfindung betrifft ein Verfahren zur Bestimmung einer initialen Rotorlage eines Dreiphasen-Elektromotors, eine Steuereinheit und einen Elektromotor. Die Erfindung liegt somit insbesondere auf dem Gebiet der Elektromotoren und der Ansteuerung von Elektromotoren.

Für den zuverlässigen Betrieb eines Dreiphasen-Elektromotors ist oftmals die Detektion der Rotorposition, insbesondere im Stillstand oder bei niedrigen Drehzahlen des Motors, vorteilhaft. Insbesondere ist eine Kenntnis der Rotorposition für eine akkurate und zuverlässige Kommutierung vorteilhaft. Dazu sind im Stand der Technik diverse verschiedene Verfahren bekannt, welche in sensorbasierte und sensorlose Verfahren unterteilbar sind. Sensorbasierte Verfahren haben den Nachteil, dass sie geeignete Sensoren benötigen und entsprechend der Hardwareaufwand und die damit verbundenen Kosten höher sind, als bei sensorlosen Verfahren. Sensorlose Verfahren beruhen typischerweise auf der Einspeisung von Testpulsen bzw. Messpulsen in den Elektromotor, was zu einer unerwünschten Geräuschentwicklung führen kann. Die sensorlosen Verfahren beruhen oftmals auf der Positions- und Stromabhängigkeit von Statorinduktivitäten des Elektromotors. Die verschiedenen sensorlosen Verfahrensarten sind beispielsweise in der Offenlegungsschrift DE 10 2019 127 051 A1 beschrieben.

Sensorlose Verfahren zur Bestimmung der initialen Rotorlage beruhen typischerweise auf einer Messung der Spannung am induktiven Spannungsteiler, d.h. am Anschluss der unbestromten Phase. Diese weisen jedoch den Nachteil auf, dass in manchen Fällen keine zuverlässige Nord-/Süd-Detektion möglich ist. Dies kann insbesondere bei hochstromfähigen Motoren der Fall sein.

Um eine zuverlässige Umschaltung zwischen Kommutierungsintervallen zu erreichen, schlägt die DE 10 2019 127 051 A1 ein Verfahren vor, bei welchem eine biopolare Pulsweitenmodulation an die Anschlüsse von jeweils zwei der drei Phasen angelegt wird und bei Erreichen eines vorbestimmten Spannungs-Schwellwerts auf das nächste Kommutierungsintervall umgeschaltet wird.

Die DE 10 2016 123707 A1 beschreibt eine Ansteuervorrichtung für einen Motor. Dabei kann über einen passiv geschalteten Phasenanschluss auf eine Spannung zugegriffen werden, die zwischen einem Sternpunkt und einem Bezugspotenzial anliegt. Dabei sei darauf zu achten, dass ein Stromfluss durch die passive Phase vermieden wird, um den sich an dem Sternpunkt ausbildenden Spannungsteiler im Wesentlichen nicht zu beeinflussen.

Die WO 2009/047217 A2 beschreibt ein Verfahren zum Betrieb einer elektrischen Maschine mit drei Phasen. Dabei wird zum Bestimmen der Rotorposition eine Abweichung eines zeitlichen Verlaufs einer induzierten Spannung gegenüber einem zeitlichen Verlauf einer gepulsten Spannung bestimmt.

Die DE 10 2016 123715 A1 beschreibt eine Ansteuervorrichtung für einen mehrphasigen Motor mit einer Steuereinrichtung. Die Steuereinrichtung ist dazu eingerichtet, in vier von fünf Phasenanschlüsse ein pulsweitenmoduliertes Spannungsmuster einzuprägen, sodass sich in dem ersten Phasenanschluss ein von dem Drehwinkel des mehrphasigen Motors abhängiges Auswertesignal ergibt. Die Steuereinrichtung ist ferner dazu eingerichtet, aus dem Auswertesignal den Drehwinkel und/oder eine Kommutationsbedingung des mehrphasigen Motors zu bestimmen.

Die DE 102 21 385 A1 beschreibt ein Verfahren zum Starten eines bürstenlosen Gleichstrommotors. Dabei werden mittels Messshunts die Phasenströme in den Wicklungsphasen verglichen und mittels Komparatoren verglichen.

Die DE 102 20 077 A1 beschreibt ein Verfahren zum Starten eines bürstenlosen Gleichstrommotors.

Es ist eine Aufgabe der vorliegenden Erfindung, ein Verfahren mit geringen Anforderungen an die Hardware zur zuverlässigen Bestimmung einer initialen Rotorlage eines Dreiphasen-Elektromotors bereitzustellen, welches insbesondere auch eine zuverlässige Nord-Süd-Detektion erlaubt.

Die Aufgabe wird durch die Gegenstände der unabhängigen Ansprüche gelöst. Optionale Ausführungsformen sind in den abhängigen Ansprüchen und in der Beschreibung angegeben.

In einem Aspekt betrifft die Erfindung daher ein Verfahren zur Bestimmung einer initialen Rotorlage eines Dreiphasen-Elektromotors mit einer Ansteuerschaltung. Das Verfahren umfasst ein Bestromen einer ersten und zweiten Phase des Dreiphasen-Elektromotors mit einem über ein erstes Bestromungsintervall ansteigenden oder abfallenden elektrischen Strom, sowie ein Ermitteln einer induzierten Spannung in einer nicht-bestromten dritten Phase des Dreiphasen-Elektromotors zu zumindest zwei zeitlich voneinander beabstandeten Messzeitpunkten während des ersten Bestromungsintervalls. Das Verfahren umfasst ferner ein Ermitteln einer Induktions-Spannungsdifferenz der in der dritten Phase induzierten Spannung zwischen den zwei zeitlich voneinander beabstandeten Induktions-Messzeitpunkten unter Berücksichtigung einer durch das Bestromen der ersten und zweiten Phase im ersten Bestromungsintervall hervorgerufenen Spannungsänderung in der Ansteuerschaltung der ersten und/oder zweiten Phase. Außerdem umfasst das Verfahren ein Bestimmen der initialen Rotorlage anhand der ermittelten Induktions-Spannungsdifferenz.

In einem weiteren Aspekt betrifft die Erfindung eine Steuereinheit, welche dazu eingerichtet ist, eine initiale Rotorlage eines Dreiphasen-Elektromotors mittels eines erfindungsgemäßen Verfahrens zu bestimmen.

In einem weiteren Aspekt betrifft die Erfindung einen Elektromotor, umfassend einen Stator und einen relativ zum Stator rotierbaren Rotor, wobei der

Elektromotor dazu eingerichtet ist, eine initiale Rotorlage des Elektromotors mittels eines erfindungsgemäßen Verfahrens zu bestimmen.

Ein Elektromotor weist einen Stator und einen Rotor auf. Insbesondere kann der Elektromotor als ein Dreiphasen-Elektromotor ausgebildet sein, welcher drei Phasen bzw. drei Wicklungen aufweist, die jeweils über einen eigenen Anschluss bestrombar sind. Die Wicklungen können dabei im Elektromotor derart angeordnet sein, dass diese zumindest teilweise einander überlappen. Beispielsweise können die Phasen des Elektromotors in einer Dreiecksschaltung oder in einer Sternschaltung miteinander verschaltet sein. Die Begriffe "Elektromotor" und "Motor" werden in diesem Offenbarungstext als Synonyme verwendet.

Die Rotorposition entspricht einem Drehwinkel des Rotors gegenüber dem Stator. Die Kenntnis der Rotorposition kann insbesondere für eine zuverlässige Kommutierung des Motors erforderlich sein, um den Motor effizient zu betreiben. Der Drehwinkel des Rotors kann dabei in einem Bereich von 0° bis 360° liegen. Alternativ kann eine Drehwinkelzuordnung in einem Bereich von 0° bis 180° erfolgen, gepaart mit einer Bestimmung der Nord-Süd Ausrichtung des Rotors bzw. der Rotormagnete.

Der induktive Spannungsteiler kann insbesondere der zwischen dem Anschluss der unbestromten Phase und der Masse abfallenden Spannung entsprechen. Die Spannung ist dabei durch das Verhältnis der Induktivitäten $L_1$ und $L_2$ der ersten bzw. zweiten bestromten Phase bestimmt, welche wiederum von der Position des Rotors abhängt.

Eine Berücksichtigung einer durch das Bestromen der ersten und zweiten Phase im ersten Bestromungsintervall hervorgerufenen Spannungsänderung in der Ansteuerschaltung der ersten und/oder zweiten Phase beim Ermitteln der Induktions-Spannungsdifferenz bedeutet dabei, dass ein Einfluss der Spannungsänderung in der Ansteuerschaltung auf die zu ermittelnde Induktions-Spannungsdifferenz ermittelt oder abgeschätzt und zumindest teilweise kompensiert wird.

Die Erfindung bietet den Vorteil, dass sich mögliche Einflüsse und/oder Messfehler beim Ermitteln der Induktions-Spannungsdifferenz und sich daraus ergebende Einflüsse und/oder Messfehler auf die Bestimmung der initialen Rotorlage aufgrund einer Spannungsänderung in der Ansteuerschaltung reduzieren oder vermeiden lassen. Dies bietet somit den Vorteil, dass die Zuverlässigkeit der Bestimmung der initialen Rotorlage verbessert werden kann, da unerwünschte Messfehler reduziert oder vermieden werden können.

Ferner bietet die Erfindung den Vorteil, dass für die Bestimmung der initialen Rotorlage unter Berücksichtigung der in der Ansteuerschaltung hervorgerufenen Spannungsänderung keine zusätzliche Hardware zwingend erforderlich ist. Insbesondere bietet die Erfindung den Vorteil, dass keine separaten Sensoren für die Bestimmung der initialen Rotorlage bereitgestellt werden müssen und somit die Herstellungskosten für den Dreiphasen-Elektromotor und die Ansteuerschaltung gering gehalten werden können.

Ferner bietet die Erfindung den Vorteil, dass auch für Elektromotoren mit geringer Induktivität und insbesondere bei hochstromfähigen Dreiphasen-Elektromotoren eine zuverlässige Bestimmung der initialen Rotorlage ermöglicht werden, bei welchen gemäß herkömmlichen Verfahren die herkömmlich auftretenden Einflüsse zu stark ausgeprägten Messfehlern und entsprechend zu einer stark reduzierten Zuverlässigkeit der Bestimmung der initialen Rotorlage führen würden. Somit bietet die Erfindung den Vorteil, dass das erfindungsgemäße Verfahren zur Bestimmung der initialen Rotorlage eine universelle Anwendbarkeit in verschiedenen Typen von Dreiphasen-Elektromotoren aufweist und somit die erforderliche Vielfalt an Arten von Steuereinheiten und/oder Verfahren zur Bestimmung der initialen Rotorlage für verschiedene Typen von Dreiphasen-Elektromotoren gering gehalten werden kann.

Optional erfolgt das Bestromen der ersten und zweiten Phase derart, dass der elektrische Strom im ersten Bestromungsintervall streng monoton und optional linear ansteigt bzw. abfällt. Dies ermöglicht ein zuverlässiges Bestimmen eines Vorzeichens der Änderung des Stroms, d.h. ob der Strom im Bestromungsintervall ansteigt oder abfällt. Das auf diese Weise zu ermittelnde Vorzeichen der Änderung des Stromflusses kann sodann für die Nord-Süd-Detektion der Rotorlage verwendet werden.

Optional entspricht die durch das Bestromen der ersten und/oder zweiten Phase im Bestromungsintervall hervorgerufene Spannungsänderung in der Ansteuerschaltung der ersten und/oder zweiten Phase einer Shunt-Spannungsdifferenz, die an einer über einem Shunt-Widerstand zur Messung des Phasenstroms in der ersten und/oder zweiten Phase abfallenden Spannung zwischen zwei voneinander beabstandeten Shunt-Messzeitpunkten entsteht. Die Shunt-Spannungsdifferenz kann optional eine hauptsächliche Ursache für eine unerwünschte Änderung der Induktions-Spannungsdifferenz darstellen, welche das Ergebnis des Ermittelns der induktions-Spannungsdifferenz verfälschen und entsprechend die Zuverlässigkeit der Bestimmung der initialen Rotorlage reduzieren kann. Die Shunt-Spannungsdifferenz kann optional sehr gering sein und beispielsweise im Bereich von wenigen Millivolt liegen. In vielen Fällen, wenn die Induktions-Spannungsdifferenz im Vergleich zur Shunt-Spannungsdifferenz sehr groß ausgebildet ist, kann der Einfluss der Shunt-Spannungsdifferenz auf das Bestimmen der initialen Rotorlage vernachlässigbar sein. Ist jedoch die Induktions-Spannungsdifferenz sehr gering oder gar in derselben Größenordnung wie die Shunt-Spannungsdifferenz, können sich durch die Shunt-Spannungsdifferenz erhebliche unerwünschte Auswirkungen auf die ermittelte Induktions-Spannungsdifferenz ergeben, welche sodann die Bestimmung der initialen Rotorlage verfälschen. Dadurch dass die Shunt-Spannungsdifferenz jedoch beim Ermitteln der Induktions-Spannungsdifferenz berücksichtigt wird, können diese unerwünschten Einflüsse reduziert oder vermieden werden.

Optional umfassen die Induktions-Messzeitpunkte einen ersten und einen zweiten Induktions-Messzeitpunkt und die Shunt-Messzeitpunkte einen ersten und einen zweiten Shunt-Messzeitpunkt, wobei der erste Induktions-Messzeitpunkt vom ersten Shunt-Messzeitpunkt und/oder der zweite Induktions-Messzeitpunkt vom zweiten Shunt-Messzeitpunkt nicht mehr als 5 µs zeitlich beabstandet sind. Dies bietet den Vorteil, dass die jeweiligen Shunt-Spannungs-Messungen und Induktions-Spannungs-Messungen möglichst zeitnah zueinander erfolgen und entsprechend auch die Shunt-Spannungsdifferenz und die Induktions-Spannungsdifferenz über nahezu das gleiche Zeitintervall ermittelt werden. Dadurch kann erreicht werden, dass eine Shunt-Spannungsdifferenz berücksichtigt werden kann, welche möglichst nah an der tatsächlich während der Messung der Induktions-Spannungsdifferenz bzw. der Induktions-Spannungen vorherrschenden Shunt-Spannungsdifferenz bzw. der jeweils vorherrschenden Shunt-Spannung liegt. Dies ermöglicht eine besonders genaue Kompensation der Einflüsse der Shunt-Spannungsdifferenz beim Ermitteln der Induktions-Spannungsdifferenz.

Optional sind der erste und der zweite Induktions-Messzeitpunkt zumindest 10 µs, optional zumindest 100 µs, optional zumindest 1 ms voneinander beabstandet. Alternativ oder zusätzlich sind der erste und der zweite Shunt-Messzeitpunkt zumindest 10 µs, optional zumindest 100 µs, optional zumindest 1 ms voneinander beabstandet. Dies bietet den Vorteil, dass die Zeitspanne zwischen den Messzeitpunkten der Induktions-Spannungen und/oder der ShuntSpannungen ausreichend lang ist, um einen ausgeprägten Anstieg oder Abfall des Stromflusses durch die Induktivitäten und/oder den Shunt zu erzielen und entsprechend eine geeignete Signalamplitude für das Ermitteln der Induktions-Spannungsdifferenz zu erhalten.

Optional wird die durch das Bestromen der ersten und/oder zweiten Phase im Bestromungsintervall hervorgerufene Spannungsänderung in der ersten und/oder zweiten Phase in Form einer vorbestimmten, geschätzten Shunt-Spannungsdifferenz berücksichtigt. Mit anderen Worten kann das Ermitteln der Shunt-Spannungsdifferenz gemäß einer optionalen Ausführungsform darauf beschränkt sein, dass diese geschätzt anstatt gemessen wird. Diese optionale, alternative Ausführungsform bietet somit die Möglichkeit, anstatt einer Messung bzw. Ermittlung der Shunt-Spannung bzw. Shunt-Spannungsdifferenz diese durch eine Schätzung zur berücksichtigen. Beispielsweise kann die Schätzung auf einer Berechnung des Schätzwertes anhand anderer bekannter Parameter und/oder auf experimentell bestimmten und bereitgestellten Daten und/oder Erfahrungswerten beruhen. Beispielsweise kann die Shunt-Spannungsdifferenz mittels des folgenden mathematischen Zusammenhangs geschätzt werden:

$$\Delta U_{shunt} = \frac{U}{2L} \cdot \Delta T \cdot R_{shunt}$$

Dabei indiziert $\Delta U_{snunt}$ die Shunt-Spannungsdifferenz, $U$ die Versorgungsspannung, $L$ die Induktivität der ersten bzw. zweiten Phase (die als identisch angenommen werden), $\Delta T$ den zeitlichen Abstand zwischen der ersten und zweiten Induktions-Spannungsmessung und $R_{shunt}$ den ohmschen Widerstand des Shunt-Widerstands. Eine derartige Abschätzung der Shunt-Spannungsdifferenz kann somit eine Lösung bieten, bei welcher kein Ermitteln bzw. Messen der Shunt-Spannungsdifferenz erforderlich ist und somit der Hardware- und/oder Rechenaufwand gering gehalten werden kann.

Optional erfolgt die Berücksichtigung der durch das Bestromen der ersten und/oder zweiten Phase im Bestromungsintervall hervorgerufenen Spannungsänderung in der ersten und/oder zweiten Phase dadurch, dass die Induktions-Spannungsdifferenz um einen zur Shunt-Spannungsdifferenz proportionalen Wert reduziert wird. Beispielsweise kann der zur Shunt-Spannungsdifferenz proportionale Wert den Wert der Shunt-Spannungsdifferenz selbst darstellen. Gemäß anderen Ausführungsformen können jedoch auch Bruchteile und/oder Vielfache der Shunt-Spannungsdifferenz dazu verwendet werden. Dass die Induktions-Spannungsdifferenz um einen zur Shunt-Spannungsdifferenz proportionalen Wert reduziert wird, bedeutet dabei, dass die Differenz der Induktions-Spannungsdifferenz und der Shunt-Spannungsdifferenz für als ermittelte Induktions-Spannungsdifferenz für die Bestimmung der initialen Rotorlage verwendet wird. Auf diese Weise können die Einflüsse der Shunt-Spannungsdifferenz auf die ermittelte Induktions-Spannungsdifferenz reduziert oder gar ganz eliminiert werden.

Optional erfolgt die Berücksichtigung der durch das Bestromen der ersten und/oder zweiten Phase im Bestromungsintervall hervorgerufenen Spannungsänderung in der ersten und/oder zweiten Phase dadurch, dass die Induktions-Spannungsdifferenz um den halben Wert der Shunt-Spannungsdifferenz reduziert wird. Dies bietet eine besonders einfache und zuverlässige Form der Berücksichtigung. Die Änderung der Shunt-Spannung wirkt sich im Wesentlichen mit dem inversen Teilerverhältnis des induktiven Spannungsteilers heruntergeteilt als Fehler auf die gemessene Änderung der Induktions-Spannung am induktiven Spannungsteiler aus. Da das Teilerverhältnis am induktiven Spannungsteiler wiederum positionsabhängig ist, kann man für eine exakte Kompensation genaugenommen das Teilerverhältnis messen und die Shunt-Spannungsdifferenz dividiert durch das gemessene Teilerverhältnis von der Induktions-Spannungsdifferenz subtrahieren. Da in vielen Ausführungsformen das Teilerverhältnis am induktiven Spannungsteiler während der Positionsdetektion des Rotors gemessen wird, kann dies ohne zusätzliche Messschritte implementiert werden. Zur Vereinfachung und Minimierung der nötigen Rechenleistung kann jedoch ein festes Teilerverhältnis von ½ verwendet werden, sodass der halbe Wert der Shunt-Spannungsdifferenz von der Induktions-Spannungsdifferenz subtrahiert wird. Für viele in der Nutzung befindlichen Elektromotoren bewegt sich die Positionsabhängigkeit des Teilerverhältnisses des induktiven Spannungsteilers lediglich in einem Bereich zwischen 1% und 10%. Daher kann ein Teilerverhältnis von ½ eine sehr gut verwendbare Näherung darstellen, die einer brauchbaren Berücksichtigung der Shunt-Spannungsdifferenz zugrunde gelegt werden kann.

Optional umfasst das Verfahren zur Bestimmung der initialen Rotorlage ferner ein Bestromen der ersten und zweiten Phase des Dreiphasen-Elektromotors mit einem über ein zweites Bestromungsintervall ansteigenden oder abfallenden elektrischen Strom, wobei die Spannungsrichtung einer zur Bestromung angelegten Spannung der Spannungsrichtung der Spannung zur Bestromung im ersten Bestromungsintervall entgegengesetzt ist, sowie ein Ermitteln der induzierten Spannung in der nicht-bestromten dritten Phase des Dreiphasen-Elektromotors zu zumindest zwei zeitlich voneinander beabstandeten Messzeitpunkten während des zweiten Bestromungsintervalls. Zudem umfasst das Verfahren gemäß dieser optionalen Ausführungsform ein Ermitteln der Induktions-Spannungsdifferenz der in der dritten Phase induzierten Spannung zwischen den zwei zeitlich voneinander beabstandeten Induktions-Messzeitpunkten im zweiten Bestromungsintervall unter Berücksichtigung einer durch das Bestromen der ersten und zweiten Phase im zweiten Bestromungsintervall hervorgerufenen Spannungsänderung in der Ansteuerschaltung der ersten und/oder zweiten Phase, sowie ein Bestimmen der initialen Rotorlage anhand der im ersten und zweiten Bestromungsintervall ermittelten Induktions-Spannungsdifferenzen. Dies bietet den Vorteil, dass etwaige Messfehler durch etwaige auftretende Störeinflüsse eliminiert werden können, sofern diese in beiden Bestromungsintervallen gleichermaßen auftreten. Dadurch kann die Zuverlässigkeit der Bestimmung der initialen Rotorlage noch weiter erhöht werden. Durch die Verwendung der zwei entgegengesetzten Messungen lassen sich insbesondere etwaige Ungenauigkeiten reduzieren, die durch Hystereseeigenschaften des Statormaterials hervorgerufen werden können.

Optional wird vor dem ersten und/oder zweiten Bestromungsintervall jeweils für eine vorbestimmte Zeitdauer eine elektrische Spannung an die erste und zweite Phase angelegt, welche entgegengesetzt zu der für das Bestromen anzulegenden Spannung ist. Dies bietet den Vorteil, dass etwaige Einflüsse durch eine noch vorhandene Magnetisierung durch die vorhergehende Messung und/oder Bestromung reduziert oder eliminiert werden können. Die vorbestimmte Zeitdauer beträgt dabei optional nicht mehr als 100 ms.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst. Insbesondere können die einzelnen Aspekte der vorliegenden Offenbarung miteinander kombiniert werden. So kann optional ein Verfahren zur Bereitstellung eines Kommutierungsintervalls die Verwendung von Magnetisierungsparametern beinhalten, welche gemäß einem Verfahren nach einem weiteren Aspekt der vorliegenden Offenbarung bestimmt wurden. Alternativ oder zusätzlich kann ein Verfahren zur Bestimmung einer initialen Rotorlage eines Dreiphasen-Elektromotors gemäß einem Aspekt der vorliegenden Offenbarung die Verwendung von Magnetisierungsparametern beinhalten, welche gemäß einem Verfahren nach einem weiteren Aspekt der vorliegenden Offenbarung bestimmt wurden. Auch kann in eine Ansteuerung eines Dreiphasen-Elektromotors ein Verfahren zur Bereitstellung eines Kommutierungsintervalls gemäß einem Aspekt der vorliegenden Offenbarung und ein Verfahren zur Bestimmung der initialen Rotorlage des Dreiphasen-Elektromotors gemäß einem Aspekt der vorliegenden Offenbarung implementiert sein, welche optional Magnetisierungsparameter des Dreiphasen-Elektromotors verwenden, die gemäß einem Verfahren nach einem weiteren Aspekt der vorliegenden Offenbarung bestimmt wurden. Mit anderen Worten können die einzelnen Aspekte der Erfindung miteinander kombiniert werden oder unabhängig voneinander verwendet werden.

Weitere Einzelheiten und Vorteile der Erfindung sollen nun anhand der folgenden Beispiele und bevorzugten Ausführungsformen mit Bezug auf die Figuren näher erläutert werden.

Kurzbeschreibung der Figuren:

Die Figuren 1A und 1B zeigen schematische Darstellungen eines Dreiphasen-Elektromotors in Sternschaltung (Figur 1A) und in Dreiecksschaltung (Figur 1B).

Figur 1C zeigt einen Elektromotor und eine Steuereinheit gemäß einer optionalen Ausführungsform in einer schematischen Darstellung.

Figuren 2A und 2B zeigen herkömmliche Mess- und Ansteuerschaltungen für einen Dreiphasen-Elektromotor.

Figur 3 zeigt einen beispielhaften Verlauf einer ermittelten induzierten Spannung.

Figur 4 zeigt einen beispielhaften Verlauf der Induktions-Spannungsdifferenz über eine volle elektrische Umdrehung des Rotors gegenüber dem Stator.

Figur 5 zeigt einen beispielhaften Verlauf der induzierten Spannung in einer dritten, unbestromten Phase mit der Zeit, während die erste und zweite Phase bestromt werden.

Figur 6 zeigt den zeitlichen Verlauf der Shunt-Spannung.

Figur 7 zeigt einen Vergleich des gemessenen Signals der unkorrigierten Induktions-Spannungsdifferenz mit dem halben Wert der Shunt-Spannungsdifferenz über den Drehwinkel des Rotors.

Figur 8 zeigt beispielhaft das Differenzsignal zur Nord-Süd-Detektion bzw. zur Bestimmung der initialen Rotorlage.

In den folgenden Figuren werden gleiche oder ähnliche Elemente in den verschiedenen Ausführungsformen der Einfachheit halber mit gleichen Bezugszeichen bezeichnet.

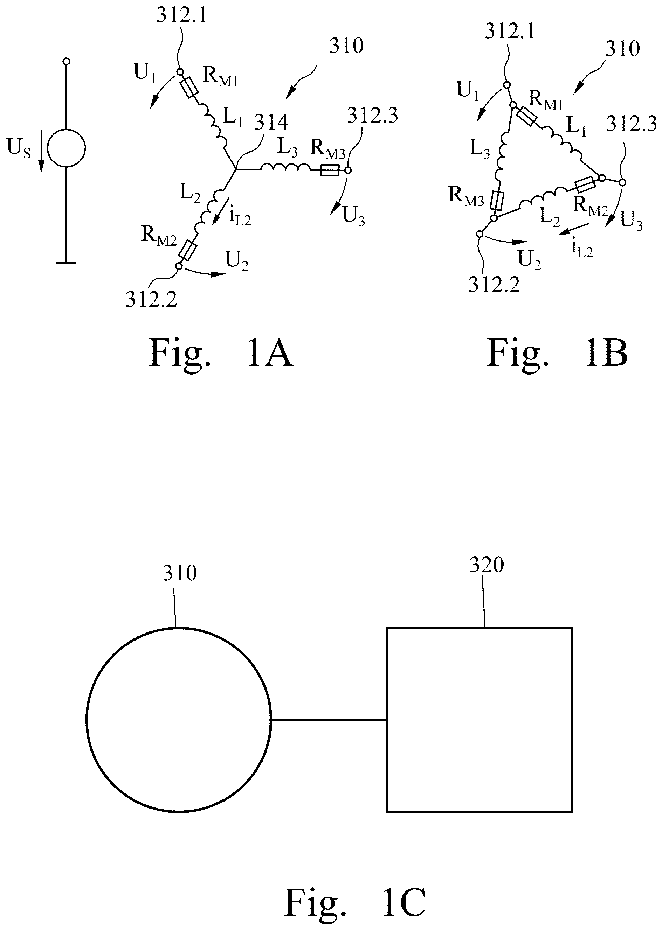

Die Figuren 1A und 1B zeigen beispielhaft in schematischen Darstellungen einen Dreiphasen-Elektromotor 310 in Sternschaltung (Figur 1A) und in Dreiecksschaltung (Figur 1B) gemäß optionalen Ausführungsformen. Der Elektromotor 310 weist dabei drei Anschlüsse 312.1, 312.2 und 312.3 für die drei verschiedenen Phasen 312 auf. Jede der drei Phasen 312.1, 312.2 und 312.3 ist dabei beispielhaft durch eine zugehörige Induktivität $L_1$, $L_2$ bzw. $L_3$ und einen zugehörigen ohmschen Widerstand $R_{M1}$, $R_{M2}$ bzw. $R_{M3}$ charakterisiert. Die Versorgungsspannung des Elektromotors 310 ist als $U_S$ gekennzeichnet und entspricht einer Potenzialdifferenz gegenüber einem Massepotenzial. An den drei Anschlüssen 312.1, 312.2 und 312.3 der drei Phasen können voneinander unterschiedliche Spannungen $U_1$, $U_2$ bzw. $U_3$ anliegen, welche ebenfalls eine Potenzialdifferenz gegenüber dem Massepotenzial darstellen.

Jede der drei Phasen ist an einem Ende mit einem zugehörigen Anschluss 312.1, 312.2 und 312.3 verbunden. Im Falle der Sternschaltung (Figur 1A) ist das andere Ende mit einem Sternpunkt 314 der Sternschaltung verbunden. Im Falle der Dreiecksschaltung (Figur 1B) ist das jeweils andere Ende mit dem Anschluss 312.1, 312.2 bzw. 312.3 der nächsten Phase verbunden.

Figur 1C zeigt einen Elektromotor 310 mit einer Steuereinheit 320, welche kommunikativ miteinander verbunden sind. Die Steuereinheit 320 ist dabei separat vom Elektromotor 310 ausgebildet und dazu eingerichtet, diesen mit Steuersignalen zu versehen und insbesondere die Kommutierung des Elektromotors 310 vorzunehmen. Außerdem ist die Steuereinheit dazu eingerichtet, die initiale Rotorposition des Elektromotors 310 zu bestimmen.

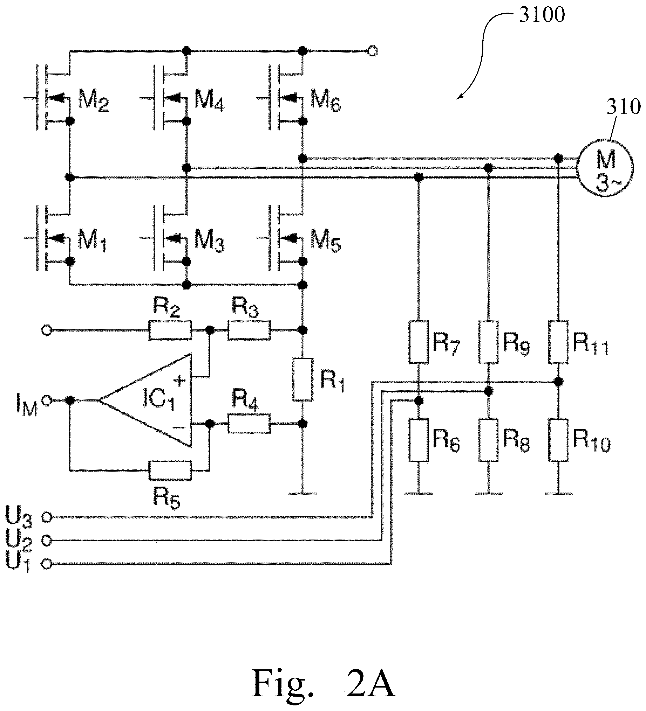

Figur 2A zeigt eine herkömmliche Mess- und Ansteuerschaltung 3100 für einen Dreiphasen-Elektromotor 310. Dabei bezeichnen die Bezugzeichen $M_1$ bis $M_6$ Feldeffekttransistoren (FETs), welche zum Anlegen von bis zur drei getakteten Spannungen an den Dreiphasen-Elektromotor dienen. Die Anordnung aus dem OPV $IC_1$ und den Widerständen $R_2$ bis $R_5$ stellt ein Verstärkernetzwerk dar, welches den Spannungsabfall über einem Shunt-Widerstand $R_1$ verstärkt und der Steuereinheit zur weiteren Verwendung zur Verfügung stellt.

Die Widerstände $R_6$ bis $R_{10}$ dienen dabei als resistive Spannungsteiler, welche die zur Bestimmung der initialen Position des Rotorwinkels zu messenden Phasenspannungen $U_1$, $U_2$ bzw. $U_3$ am induktiven Spannungsteiler herunterteilen, die sodann der Steuereinheit zur Verfügung gestellt werden.

Der Shunt-Widerstand $R_1$ dient zur Messung der einzelnen Phasenströme, d.h. der Ströme, die der jeweiligen Phase des Dreiphasen-Elektromotors zugeführt werden bzw. in diesen fließen. Die über dem Shunt-Widerstand $R_1$ abfallende Shunt-Spannung ist dabei typischerweise klein im Vergleich zu den anderen in der Ansteuerschaltung abfallenden Spannungen und kann beispielsweise im zweistelligen Millivolt-Bereich liegen.

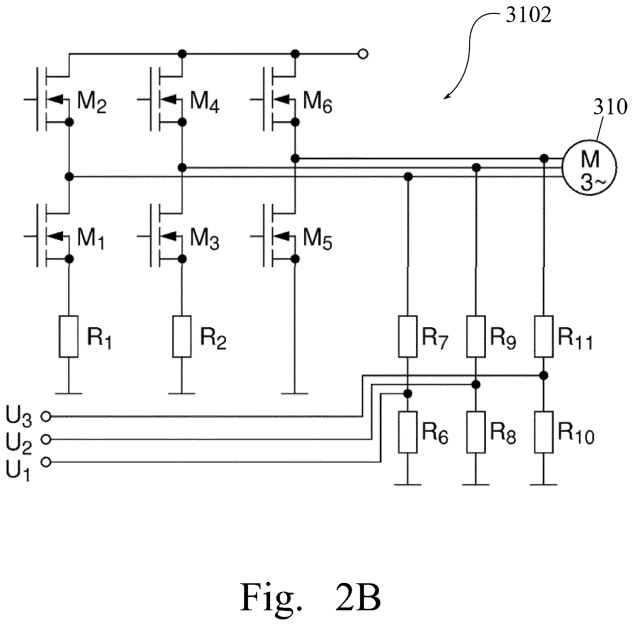

Figur 2B zeigt eine weitere herkömmliche Mess- und Ansteuerschaltung 3102 für einen Dreiphasen-Elektromotor 310, welche mehrere Shunt-Widerstände aufweist, nämlich die Shunt-Widerstände $R_1$ und $R_2$., welche jeweils mit einem FET $M_1$ bzw. $M_3$ zur Bestromung einer der Phasen des Dreiphasen-Elektromotors in Reihe geschaltet sind. Wenngleich der Dreiphasen-Elektromotor 310 drei Phasen aufweist, sind in der Regel in einer solchen Konfiguration zwei Shunt-Widerstände $R_1$ und $R_2$ zur Bestimmung des jeweils vorliegenden Phasenstroms ausreichend, da der dritte Phasenstrom des Motors 310 über den Knotensatz aus den gemessenen Strömen in den beiden jeweils anderen Phasen berechnet werden kann. Bei einer derartigen Ansteuerschaltung 3102 können optional die Spannungsabfälle über beiden Shunt-Widerständen $R_1$ und $R_2$ bei der Ermittlung der Induktions-Spannungsdifferenz berücksichtigt werden. Die Berücksichtigung bzw. Kompensation der Shunt-Spannungsdifferenz erfolgt dabei optional nur während jener Bestromungsintervalle, in denen sich auch tatsächlich ein Shunt-Widerstand $R_1$ bzw. $R_2$ im Strompfad befindet. Wird die Bestromung hingegen derart durchgeführt, dass der Strom über den äußeren rechten Pfad, d.h. über dem FET $M_5$, nach Masse abgeführt wird, so ist für diesen Fall keine Kompensation durchzuführen. Entsprechend kann es zweckmäßig sein, für manche Bestromungsintervalle eine Berücksichtigung der Shunt-Spannungsdifferenz vorzunehmen, für andere Bestromungsintervalle hingegen nicht. Optional kann dies auch bei einer Mittelung über mehrere Bestromungsintervalle zur Signalverbesserung berücksichtigt werden.

Im Folgenden werden ein Verfahren gemäß einer optionalen Ausführungsform zur Bestimmung einer initialen Rotorlage eines Dreiphasen-Elektromotors mittels einer Ansteuerschaltung, wie in Figur 2A dargestellt, beschrieben und dessen Hintergründe erläutert.

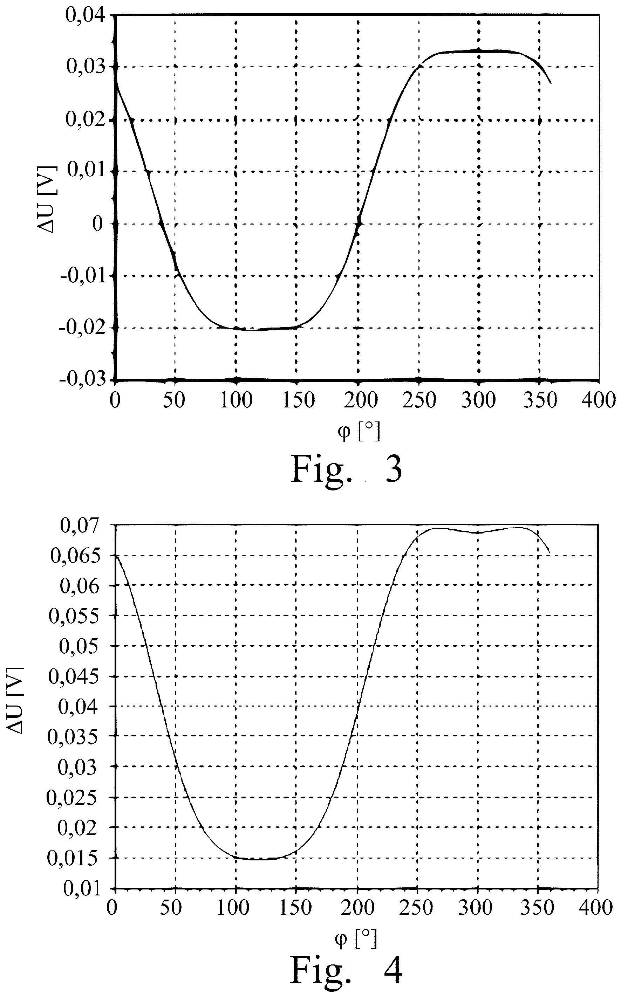

Figur 3 zeigt einen beispielhaften Verlauf einer ermittelten Spannung, welche in der unbestromten, dritten Phase eines Dreiphasen-Elektromotors 310 induziert wird, wenn die erste und die zweite Phase bestromt werden in Abhängigkeit von der Rotorlage bzw. des Drehwinkels des Rotors in Grad (horizontale Achse) über eine volle elektrische Umdrehung des Rotors relativ zum Stator. Auf der vertikalen Achse ist dabei eine Induktions-Spannungsdifferenz aufgetragen, welche durch ein Ermitteln der induzierten Spannung in der dritten, unbestromten Phase bzw. am induktiven Spannungsteiler zu zumindest zwei zeitlich voneinander beabstandeten Messzeitpunkten während des ersten Bestromungsintervalls entsteht, während die erste und die zweite Phase während des ersten Bestromungsintervalls mit einem ansteigenden oder abfallenden Strom bestromt werden. Der Graph in Figur 3 lässt erkennen, dass die Induktions-Spannungsdifferenz signifikant von der Rotorlage abhängt und insbesondere in Abhängigkeit von der Rotorlage das Vorzeichen wechselt. Dadurch bietet sich das Ermitteln der Induktions-Spannungsdifferenz an, um die initiale Rotorlage des Dreiphasen-Elektromotors 310 und die Nord-Süd-Ausrichtung des Rotors zu bestimmen. Die Pollage des Rotors kann anhand des Vorzeichens der Induktions-Spannungsdifferenz ermittelt werden, welche sich durch die Ermittlung der Induktions-Spannungsdifferenz bei der vorherrschenden, zu bestimmenden Rotorlage ergibt.

In Figur 4 ist beispielhaft der Verlauf der Induktions-Spannungsdifferenz über eine volle elektrische Umdrehung des Rotors gegenüber dem Stator für einen Dreiphasen-Elektromotor 310 mit geringer Abhängigkeit der Induktivität vom Strom gezeigt. Die geringe Abhängigkeit der Induktivität vom Strom hat zur Folge, dass der Verlauf der Induktions-Spannungsdifferenz keinen Vorzeichenwechsel mehr aufweist und entsprechend anhand eines Bestimmens des Vorzeichens der Induktions-Spannungsdifferenz (ohne weitere Korrektur) keine zuverlässige Bestimmung der Nord-Süd-Ausrichtung des Rotors und der initialen Rotorlage mehr möglich ist. Wie in Figur 4 zu erkennen ist, reichen die Werte der Induktions-Spannungsdifferenz von etwa 0,015 V bis etwa 0,07 V und nehmen dabei lediglich positive Werte an. Dies kann zusätzlich dadurch verstärkt werden, dass in manchen Motoren die Amplituden der Spannungsdifferenz noch geringer ausfallen und dadurch die Wahrscheinlichkeit eines Ausbleibens eines Vorzeichenwechsels noch weiter erhöht wird.

Zwar erscheint der Verlauf der Induktions-Spannungsdifferenz in Figur 4 qualitativ in etwa dem Verlauf in Figur 3 zu entsprechen und die Abweichung hauptsächlich in einem vertikalen Versatz zu bestehen, allerdings führt dies dazu, dass darauf basierend im Betrieb keine zuverlässige Bestimmung der initialen Rotorlage erfolgen kann. Dies liegt daran, dass bei der Bestimmung der initialen Rotorlage kein Mittelwert der Induktions-Spannungsdifferenz gebildet werden kann, da dafür das Ermitteln der Induktions-Spannungsdifferenz über eine volle elektrische Umdrehung oder zumindest einen großen Teil davon erfolgen müsste. Dies ist jedoch bei Stillstand des Rotors und für die Bestimmung der initialen Lage des Rotors nicht möglich, da sich im Stillstand des Rotors die Rotorlage naturgemäß nicht ändert.

Gemäß der erläuterten Ausführungsform erfolgt eine Berücksichtigung der Ursache für die Verschiebung und eine Berücksichtigung der Ursache bei der Ermittlung der Induktions-Spannungsdifferenz zur Bestimmung der initialen Rotorlage.

Bei Verwendung einer Ansteuerschaltung gemäß Figur 2A liegt die Ursache für die Verschiebung darin, dass für die Bestimmung der initialen Rotorlage ein Bestromen einer ersten und zweiten Phase des Dreiphasen-Elektromotors 310 mit einem über ein erstes Bestromungsintervall ansteigenden oder abfallenden elektrischen Strom erfolgt und die Stromänderung wiederum zu einer Spannungsänderung der über dem Shunt-Widerstand $R_1$ abfallenden Spannung führt. Dieser Spannungsabfall beeinflusst die ermittelte Induktions-Spannungsdifferenz zwischen zwei beabstandeten Induktions-Messzeitpunkten während des ersten Bestromungsintervalls und führt zu der beobachteten Verschiebung. Insbesondere bei solchen Dreiphasen-Elektromotoren, bei denen der Strom beim Bestromen der ersten und zweiten Phase das Magnetfeld nur geringfügig ändert und entsprechend nur zur einer geringen Induktions-Spannung und Induktions-Spannungsdifferenz führt, kann die Spannungsänderung der Shunt-Spannung zu einer Shunt-Spannungsdifferenz zu zwei beabstandeten Shunt-Messzeitpunkten, welche möglichst nahe an den Induktions-Messzeitpunkten im Bestromungsintervall liegen, eine ähnliche Ausprägung bzw. Größe bzw. Amplitude aufweisen, wie die Induktions-Spannungsdifferenz. In solch einem Fall kann die Spannungsänderung der über dem Shunt-Widerstand abfallende Spannung bzw. die Shunt-Spannungsdifferenz signifikant zur Verschiebung der induktions-Spannungsdifferenz führen und insbesondere auch dazu führen, dass kein Vorzeichenwechsel der Induktions-Spannungsdifferenz mehr in Abhängigkeit von der Rotorlage erfolgt.

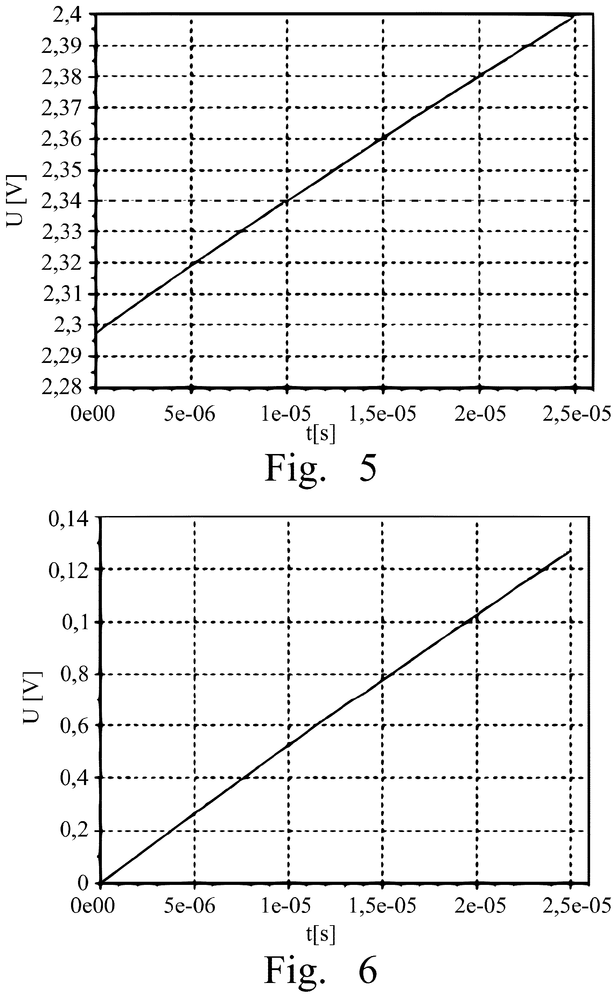

In Figur 5 ist beispielhaft der Verlauf der induzierten Spannung in einer dritten, unbestromten Phase mit der Zeit dargestellt, während die erste und zweite Phase mit einem ansteigenden elektrischen Strom bestromt werden. Die Versorgungsspannung beträgt dabei 5 V. Das dargestellte Zeitfenster von etwa 25 μs kann dabei als beispielhaftes Bestromungsintervall angesehen werden, in welchem sich die induzierte Spannung in der dritten Phase, d.h. am induktiven Spannungsteiler, um etwa 100 mV erhöht. Setzt man die beiden Induktions-Messzeitpunkte am Beginn und Ende des dargestellten Zeitfensters bzw. des beispielhaften Bestromungsintervalls, erhält man somit eine Induktions-Spannungsdifferenz von etwa 100 mV.

Figur 6 zeigt für das selbe Zeitfenster aus Figur 5 den zeitlichen Verlauf der Shunt-Spannung, d.h. der Spannung, die bei der Bestromung über dem Shunt-Widerstand $R_1$ (Figur 2A) abfällt. Darin ist erkennbar, dass über das Bestromungsintervall die Shunt-Spannung um etwa 130 mV ansteigt und somit die Shunt-Spannungsdifferenz zwischen dem Beginn und dem Ende des Bestromungsintervalls selbst größer ausgeprägt ist, als die Induktions-Spannungsdifferenz (Figur 5). Da sich die die Shunt-Spannung bzw. Shunt-Spannungsdifferenz mit dem inversen Teilerverhältnis des induktiven Spannungsteilers heruntergeteilt als Fehler auf die gemessene Spannungsänderung am induktiven Spannungsteiler auswirkt, führt dies zu einer fehlerbehafteten Messung der Induktions-Spannungsdifferenz, sofern die Shunt-Spannungsdifferenz unberücksichtigt bleibt. Entsprechend erfolgt gemäß der erläuterten Ausführungsform eine Berücksichtigung der Shunt-Spannungsdifferenz beim Ermitteln der Induktions-Spannungsdifferenz.

Gemäß einer optionalen Ausführungsform kann die Shunt-Spannungsdifferenz beim Ermitteln der Induktions-Spannungsdifferenz berücksichtigt werden, indem man das Teilerverhältnis des induktiven Spannungsteilers misst, welches wiederum von der Rotorlage abhängt, und sodann die Shunt-Spannungsdifferenz dividiert durch das gemessene Teilerverhältnis von der Induktions-Spannungsdifferenz subtrahiert. Dies bietet den Vorteil, dass eine präzise Berücksichtigung und Kompensation der Einflüsse der Shunt-Spannungsdifferenz auf die Induktions-Spannungsdifferenz erzielt werden kann. Da während der Bestimmung der initialen Rotorlage das Teilerverhältnis am induktiven Spannungsteiler gemessen werden kann, ist dies in manchen optionalen Ausführungsformen ohne zusätzlichen Aufwand möglich.

Gemäß einer weiteren optionalen Ausführungsform erfolgt die Berücksichtigung der Shunt-Spannungsdifferenz beim Ermitteln der Induktions-Spannungsdifferenz auf andere Weise. Gemäß dieser optionalen Ausführungsform wird für die Korrektur bzw. Berücksichtigung ein festes Teilerverhältnis von 2 angenommen bzw. verwendet. Dies erscheint eine brauchbare Näherung zu sein, da die Schwankungen des Teilerverhältnisses mit der Rotorlage des Dreiphasen-Elektromotors typischerweise lediglich in einem Bereich von 1% bis 10% der gesamten Amplitude liegen. Durch diese Näherung kann die für die Berücksichtigung der Shunt-Spannungsdifferenz erforderliche Rechenleistung reduziert werden.

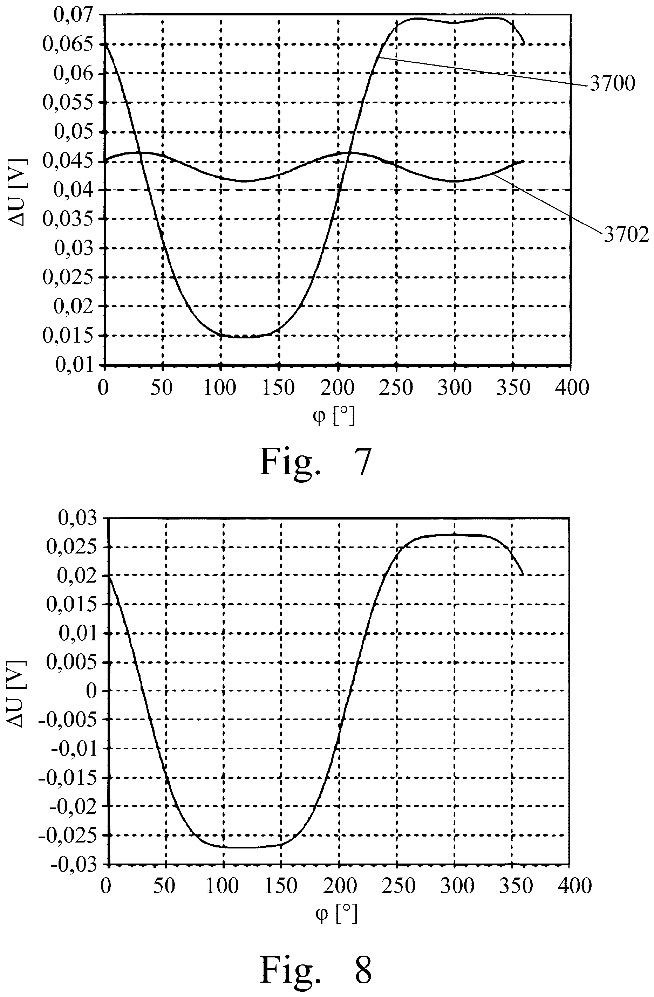

Figur 7 zeigt beispielhaft einen Vergleich des gemessenen Signals der unkompensierten bzw. unkorrigierten Induktions-Spannungsdifferenz 3700, wie bereits in Figur 4 dargestellt, mit dem halben Wert der Shunt-Spannungsdifferenz 3702 über den Drehwinkel des Rotors. Dabei ist erkennbar, dass die halbierte Shunt-Spannungsdifferenz 3702 einen mit der halben Periode einer elektrischen Umdrehung periodischen Anteil enthält. Dieser würde entfallen, wenn die vollständige Kompensation ohne Näherung, wie oben beschrieben, verwendet wird. Allerdings ist der daraus hervorgehende Restfehler gemäß manchen Ausführungsformen unproblematisch für die Zuverlässigkeit des Verfahrens zur Bestimmung der initialen Rotorlage, sodass auch die Näherung hinsichtlich des festen Teilerverhältnisses zu durchwegs brauchbaren Ergebnissen führen kann.

Zur Nord-Süd-Detektion stehen prinzipiell drei verwendbare Intervalle zur Verfügung, aus denen gemäß einer optionalen Ausführungsform applikativ stets das am besten geeignete ausgewählt werden kann, also jenes, bei dem die Differenz aus dem Signal am induktiven Spannungsteiler, d.h. der Induktions-Spannungsdifferenz, und dem Fehlersignal, d.h. der Shunt-Spannungsdifferenz, am größten ist, sodass das Verhalten dieser Differenz um den Nulldurchgang herum für die Bestimmung der initialen Rotorlage unerheblich ist.

Figur 8 zeigt beispielhaft das Differenzsignal zur Nord-Süd-Detektion bzw. zur Bestimmung der initialen Rotorlage, welches einer Differenz der Induktions-Spanungsdifferenz 3700 und der Shunt-Spannungsdifferenz 3702 entspricht. Im Vergleich zum in Figur 4 dargestellten Signal der (nicht korrigierten) Induktions-Spannungsdifferenz, welche für eine zuverlässige Bestimmung der initialen Rotorlage unbrauchbar ist, weist das korrigierte Signal in Figur 8 eine hervorragende Symmetrie und eine hervorragende Signalqualität mit zuverlässigem Nulldurchgang auf und ist entsprechend für die zuverlässige Bestimmung der initialen Rotorlage sehr gut geeignet.

Im Folgenden wird ein Verfahren gemäß einer optionalen Ausführungsform zur Bestimmung einer initialen Rotorlage unter Verwendung einer Ansteuerschaltung gemäß Figur 2A beispielhaft erläutert.

Zunächst erfolgt ein Bestromen einer ersten und zweiten Phase des Dreiphasen-Elektromotors mit einem über ein erstes Bestromungsintervall ansteigenden oder abfallenden elektrischen Strom.

In einem weiteren Schritt erfolgt sodann Ermitteln einer induzierten Spannung in einer nicht-bestromten dritten Phase des Dreiphasen-Elektromotors zu einem ersten Induktions-Messzeitpunkt während des Bestromungsintervalls und zeitgleich dazu oder in möglichst kurzem zeitlichen Abstand dazu eine Messung des Spannungsabfalls über dem Shunt-Widerstand $R_1$ der Ansteuerschaltung, welcher als Shunt-Spannungsabfall bezeichnet wird.

Nach Verstreichen einer ausreichenden Zeit während des Bestromungsintervalls, um eine Stromänderung zu bewirken, beispielsweise 1 ms, wird im ersten Bestromungsintervall zu einem zweiten Induktions-Messzeitpunkt ein zweiter Wert der induzierten Spannung und zeitgleich dazu oder in möglichst kurzem zeitlichen Abstand dazu ein zweites Mal der Shunt-Spannungsabfall über dem Shunt-Widerstand $R_1$ gemessen.

Sodann wird die Induktions-Spannungsdifferenz ermittelt, indem die Differenz zwischen dem ersten und dem zweiten Messwert der induzierten Spannung ermittelt wird und zur Berücksichtigung der Spannungsänderung in der Ansteuerschaltung die Hälfte der Differenz der beiden gemessenen Shunt-Spannungsabfälle, d.h. die halbierte Shunt-Spannungsdifferenz, subtrahiert wird. Auf diese Weise wird eine korrigierte Induktions-Spannungsdifferenz bereitgestellt, welche sich für eine zuverlässige Bestimmung der initialen Rotorlage eignet. Entsprechend kann anhand der ermittelten Induktions-Spannungsdifferenz, bei welcher die in der Ansteuerschaltung hervorgerufene Spannungsänderung korrigiert wurde, die initiale Rotorlage bestimmt werden.

Gemäß einer anderen optionalen Ausführungsform kann anstatt der halbierten Shunt-Spannungsdifferenz auch eine mit einem tatsächlich gemessenen inversen Teilerverhältnis des induktiven Spannungsteilers multiplizierte Differenz aus beiden Shuntspannungen verwendet werden.

Eine weitere optionale Möglichkeit zur Ermittlung des für die Kompensation heranzuziehenden Spannungsabfalls in der Ansteuerschaltung kann darauf basieren, in einem ersten Bestromungsintervall nur die induzierte Spannung bzw. die Induktions-Spannungsdifferenz zu messen und sodann in einem weiteren Bestromungsintervall die identischen Spannungen erneut anzulegen und zu den entsprechenden Messzeitpunkten, zu denen im ersten Bestromungsintervall die Induktions-Spannungsdifferenz gemessen wurde, im zweiten Bestromungsintervall die Shunt-Spannungsdifferenz zu messen. Dies bietet die Möglichkeit, mit nur einem Analog-Digital-Konverter die Induktions-Spannungsdifferenz und die Shunt-Spannungsdifferenz zu ermitteln.

Eine weitere optionale Möglichkeit besteht darin, die Shunt-Spannungsdifferenz zu schätzen, wie bereits oben im allgemeinen Beschreibungsteil erläutert wurde.

Eine weitere optionale Möglichkeit zur Verbesserung des Signals kann das Verwenden mehrerer Bestromungsintervalle umfassen, bei denen die angelegte Spannung alternierend invertiert ist und die dabei ermittelten Spannungsdifferenzen beispielsweise summiert und/oder gemittelt werden. Dazu können beispielsweise jeweils die Induktions-Spannungsdifferenzen und die Shunt-Spannungsdifferenzen miteinander addiert und/oder gemittelt werden.

Die beschriebenen Verfahren sind dabei nicht auf die Kompensation von Fehlern beschränkt, die von einem Spannungsabfall über einem oder mehreren Shunt-Widerständen herrühren. Vielmehr können diese oder ähnliche Verfahren auch dazu verwendet werden, um etwaige andere Fehler und/oder Asymmetrien aus der Ansteuerschaltung, etwa zwischen Halbpfaden nach positiver und negativer Versorgungsspannung, zu kompensieren. Dazu können die verursachten Fehler gemessen und/oder bei bekannter Asymmetrie ähnlich der beschriebenen Schätzung berechnet werden.

## Bezugszeichenliste

| | |
|---|---|
| 310 | Dreiphasen-Elektromotor |
| 312 | Phase des Dreiphasen-Elektromotors |
| 312.1, 312.2, 312.3 | erste, zweite bzw. dritte Phase des Dreiphasen-Elektromotors |
| 314 | Sternpunkt |
| 320 | Steuereinheit |
| $U_1$, $U_2$, $U_3$ | Spannung am Anschluss der ersten, zweiten bzw. dritten Phase |
| $L_1$, $L_2$, $L_3$ | Induktivität der ersten, zweiten bzw. dritten Phase |
| $R_{M1}$, $R_{M2}$, $R_{M3}$ | ohmscher Widerstand der ersten, zweiten bzw. dritten Phase |
| $i_{L1}$, $i_{L2}$, $i_{L3}$ | Stromfluss in der ersten, zweiten bzw. dritten Phase |
| $U_S$ | Versorgungsspannung |
| $M_1$ bis $M_6$ | Feldeffekt-Transistoren der Ansteuerschaltung |
| $R_1$ ($R_2$) | Shunt-Widerstände |
| $R_2$ bis $R_5$ | Beschaltung zur Strommessung |
| $R_6$ bis $R_{10}$ | ohmsche Widerstände des resistiven Spannungsteilers |
| $IC_1$ | OPV zur Strommessung |
| 3100 | Ansteuerschaltung |
| 3102 | Ansteuerschaltung |

3700    Signal der Induktions-Spannungsdifferenz
3702    Signal der Shunt-Spannungsdifferenz

## Patentansprüche

1.  Verfahren zur Bestimmung einer initialen Rotorlage eines Dreiphasen-Elektromotors (310) mit einer Ansteuerschaltung (3100), das Verfahren umfassend:

    - Bestromen einer ersten und zweiten Phase (312.1, 312.2) des Dreiphasen-Elektromotors (310) mit einem über ein erstes Bestromungsintervall ansteigenden oder abfallenden elektrischen Strom;
    - Ermitteln einer induzierten Spannung in einer nicht-bestromten dritten Phase (312.3) des Dreiphasen-Elektromotors (310) zu zumindest zwei zeitlich voneinander beabstandeten Messzeitpunkten während des ersten Bestromungsintervalls;
    - Ermitteln einer Induktions-Spannungsdifferenz (3700) der in der dritten Phase (312.3) induzierten Spannung zwischen den zwei zeitlich voneinander beabstandeten Induktions-Messzeitpunkten unter Berücksichtigung einer durch das Bestromen der ersten und zweiten Phase im ersten Bestromungsintervall hervorgerufenen Spannungsänderung in der Ansteuerschaltung (3100) der ersten und/oder zweiten Phase (312.13312.1, 312.2); und
- Bestimmen der initialen Rotorlage anhand der ermittelten Induktions-Spannungsdifferenz (3700);

**dadurch gekennzeichnet, dass**

- die Berücksichtigung der durch das Bestromen der ersten und zweiten Phase im ersten Bestromungsintervall hervorgerufenen Spannungsänderung in der Ansteuerschaltung (3100) der ersten und/oder zweiten Phase (312.13312.1, 312.2) in Form einer vorbestimmten, geschätzten Shunt-Spannungsdifferenz erfolgt, oder -die durch das Bestromen der ersten und/oder zweiten Phase (312.1, 312.2) im Bestromungsintervall hervorgerufene Spannungsänderung in der Ansteuerschaltung (3100) der ersten und/oder zweiten Phase (312.1, 312.2) einer Shunt-Spannungsdifferenz (3702) entspricht, die an einer über einem Shunt-Widerstand (R1) zur Messung des Phasenstroms in der ersten und/oder zweiten Phase (312.1, 312.2) abfallenden Spannung zwischen zwei voneinander beabstandeten Shunt-Messzeitpunkten entsteht, und wobei die Berücksichtigung der durch das Bestromen der ersten und/oder zweiten Phase (312.1, 312.2) im Bestromungsintervall hervorgerufenen Spannungsänderung in der ersten und/oder zweiten Phase (312.1, 312.2) dadurch erfolgt, dass die Induktions-Spannungsdifferenz (3700) um einen zur Shunt-Spannungsdifferenz (3702) proportionalen Wert reduziert wird.

2. Verfahren gemäß Anspruch 1, wobei das Bestromen derart erfolgt, dass der elektrische Strom im ersten Bestromungsintervall streng monoton und optional linear ansteigt bzw. abfällt.

3. Verfahren gemäß Anspruch 1 oder 2, wobei die Induktions-Messzeitpunkte einen ersten und einen zweiten Induktions-Messzeitpunkt und die Shunt-Messzeitpunkte einen ersten und einen zweiten Shunt-Messzeitpunkt umfassen, wobei der erste Induktions-Messzeitpunkt vom ersten Shunt-Messzeitpunkt und/oder der zweite Induktions-Messzeitpunkt vom zweiten Shunt-Messzeitpunkt nicht mehr als 5 µs zeitlich beabstandet sind.

4. Verfahren gemäß Anspruch 3, wobei der erste und der zweite Induktions-Messzeitpunkt zumindest 10 µs, optional zumindest 100 µs, optional zumindest 1 ms voneinander beabstandet sind, und/oder wobei der erste und der zweite Shunt-Messzeitpunkt zumindest 10 µs, optional zumindest 100 µs, optional zumindest 1 ms voneinander beabstandet sind.

5. Verfahren gemäß einem der Ansprüche 1 bis 4, wobei die Berücksichtigung der durch das Bestromen der ersten und/oder zweiten Phase (312.1, 312.2) im Bestromungsintervall hervorgerufenen Spannungsänderung in der ersten und/oder zweiten Phase (312.1, 312.2) dadurch erfolgt, dass die Induktions-Spannungsdifferenz (3700) um einen zur Shunt-Spannungsdifferenz (3702) proportionalen Wert reduziert wird.

6. Verfahren gemäß einem der Ansprüche 1 bis 5, wobei die Berücksichtigung der durch das Bestromen der ersten und/oder zweiten Phase im Bestromungsintervall hervorgerufenen Spannungsänderung in der ersten und/oder zweiten Phase (312.1, 312.2) dadurch erfolgt, dass die Induktions-Spannungsdifferenz (3700) um den halben Wert der Shunt-Spannungsdifferenz (3702) reduziert wird.

7. Verfahren gemäß einem der Ansprüche 1 bis 6, ferner umfassend:

- Bestromen der ersten und zweiten Phase (312.1, 312.2) des Dreiphasen-Elektromotors (310) mit einem über ein zweites Bestromungsintervall ansteigenden oder abfallenden elektrischen Strom, wobei die Spannungsrichtung einer zur Bestromung angelegten Spannung der Spannungsrichtung der Spannung zur Bestromung im ersten Bestromungsintervall entgegengesetzt ist;
- Ermitteln der induzierten Spannung in der nicht-bestromten dritten Phase des Dreiphasen-Elektromotors (310) zu zumindest zwei zeitlich voneinander beabstandeten Messzeitpunkten während des zweiten Bestromungsintervalls;
- Ermitteln der Induktions-Spannungsdifferenz der in der dritten Phase induzierten Spannung zwischen den zwei zeitlich voneinander beabstandeten Induktions-Messzeitpunkten im zweiten Bestromungsintervall unter Berücksichtigung einer durch das Bestromen der ersten und zweiten Phase (312.1, 312.2) im zweiten Bestromungsintervall hervorgerufenen Spannungsänderung in der Ansteuerschaltung der ersten und/oder zweiten Phase (312.1, 312.2);
- Bestimmen der initialen Rotorlage anhand der im ersten und zweiten Bestromungsintervall ermittelten Induktions-Spannungsdifferenzen.

8. Verfahren gemäß einem der Ansprüche 1 bis 7, wobei vor dem ersten und/oder zweiten Bestromungsintervall jeweils für eine vorbestimmte Zeitdauer eine elektrische Spannung an die erste und zweite Phase (312.1, 312.2) angelegt wird, welche entgegengesetzt zu der für das Bestromen anzulegenden Spannung ist.

9. Verfahren gemäß Anspruch 8, wobei die vorbestimmte Zeitdauer nicht mehr als 100 ms beträgt.

10. Steuereinheit für einen Dreiphasen-Elektromotor, **dadurch gekennzeichnet, dass**

- die Steuereinheit dazu eingerichtet ist, von einer Mess- und Ansteuerschaltung des Dreiphasen-Elektromotors gemessene Phasenspannungen an den Phasen des Dreiphasen-Elektromotors und einen gemessenen Spannungsabfall über einem Shunt-Widerstand zur Messung einzelner Phasenströme zu empfangen und mittels der Mess- und Ansteuerschaltung bis zu drei getaktete Spannungen an den Dreiphasen-Elektromotor anzulegen; und
- unter Verwendung des von der Mess- und Ansteuerschaltung empfangenen Spannungsabfalls und der von der Mess- und Ansteuerschaltung empfangenen Phasenspannungen und mittels eines Bestromens der Phasen durch die Mess- und Ansteuerschaltung eine initiale Rotorlage des Dreiphasen-Elektromotors gemäß eines Verfahrens nach einem der vorhergehenden Ansprüche zu bestimmen.

11. System zur Bestimmung einer initialen Rotorlage eines Dreiphasen-Elektromotors (310), das System umfassend:

- eine Mess- und Ansteuerschaltung (3100); und
- eine Steuereinheit gemäß Anspruch 10;

**dadurch gekennzeichnet, dass**

- die Mess- und Ansteuerschaltung (3100) dazu eingerichtet ist, Phasenspannungen an Phasen des Dreiphasen-Elektromotors und einen Spannungsabfall über einem Shunt-Widerstand zur Messung einzelner Phasenströme durch die Phasen des Dreiphasen-Elektromotors (310) zu messen und der Steuereinheit zur Verfügung zu stellen und bis zu drei getaktete Spannungen an den Dreiphasen-Elektromotor anzulegen.

12. Elektromotor (310), umfassend einen Stator, ein System zur Bestimmung einer initialen Rotorlage eines Dreiphasen-Elektromotors (310) gemäß Anspruch 11 und einen relativ zum Stator rotierbaren Rotor.

## Claims

1. A method for determining an initial rotor position of a three-phase electric motor (310) with a control circuit (3100), the method comprising:

- energizing a first and second phase (312.1, 312.2) of the three-phase electric motor (310) with an electric current increasing or decreasing over a first energization interval;
- determining an induced voltage in a non-energized third phase (312.3) of the three-phase electric motor (310) at least at two temporally spaced measurement times during the first energization interval;
- determining an induction voltage difference (3700) of the voltage induced in the third phase (312.3) between the two temporally spaced induction measurement times, taking into account a voltage change in the control circuit (3100) of the first and/or second phase (312.13312.1, 312.2) caused by the energization of the first and second phase in the first energization interval; and
- determining the initial rotor position based on the determined induction voltage difference (3700);

**characterized in that**

- the voltage change in the control circuit (3100) of the first and/or second phase (312.13312.1, 312.2) caused by the energization of the first and second phase in the first energization interval is taken into account in the form of a predetermined, estimated shunt voltage difference, or
- the voltage change in the control circuit (3100) of the first and/or second phase (312.1, 312.2) caused by the energization of the first and/or second phase (312.1, 312.2) in the energization interval corresponds to a shunt voltage difference (3702) which arises at a voltage drop across a shunt resistor (R1) for measuring the phase current in the first and/or second phase (312.1, 312.2) between two spaced-apart shunt measurement times, and wherein the voltage change in the first and/or second phase (312.1, 312.2) caused by the energization of the first and/or second phase (312.1, 312.2) in the energization interval is taken into account **in that** the induction voltage difference (3700) is reduced by a value proportional to the shunt voltage difference (3702).

2. The method according to claim 1, wherein the energization is carried out in such a way that the electrical current in the first energization interval increases or decreases strictly monotonically and optionally linearly.

3. The method according to claim 1 or 2, wherein the induction measurement times comprise a first and a second induction measurement time and the shunt measurement times comprise a first and a second shunt measurement time, wherein the first induction measurement time is temporally spaced apart from the first shunt measurement time and/or the second induction measurement time is temporally spaced apart from the second shunt measurement time by no more than 5 μs.

4. The method according to claim 3, wherein the first and the second induction measurement time are spaced apart from each other by at least 10 μs, optionally at least 100 μs, optionally at least 1 ms, and/or wherein the first and the second shunt measurement time are spaced apart from each other by at least 10 μs, optionally at least 100 μs, optionally at least 1 ms.

5. The method according to any one of claims 1 to 4, wherein the voltage change in the first and/or second phase (312.1, 312.2) caused by the energization of the first and/or second phase (312.1, 312.2) in the energization interval is taken into account in that the induction voltage difference (3700) is reduced by a value proportional to the shunt voltage difference (3702).

6. The method according to any one of claims 1 to 5, wherein the voltage change in the first and/or second phase (312.1, 312.2) caused by the energization of the first and/or second phase in the energization interval is taken into account in that the induction voltage difference (3700) is reduced by a value corresponding to half of the shunt voltage difference (3702).

7. The method according to any one of claims 1 to 6, further comprising:

- energizing the first and second phases (312.1, 312.2) of the three-phase electric motor (310) with an electric current that increases or decreases over a second energization interval, wherein the voltage direction of a voltage applied for energization is opposite to the voltage direction of the voltage for energization in the first energization interval;
- determining an induced voltage in a non-energized third phase of the three-phase electric motor (310) at least at two temporally spaced apart measurement times during the second energization interval;
- determining the induction voltage difference of the voltage induced in the third phase between the two temporally spaced apart induction measurement times in the second energization interval, taking into account a voltage change in the control circuit of the first and/or second phase (312.1, 312.2) caused by the energization of the first and second phase (312.1, 312.2) in the second energization interval;
- determining the initial rotor position based on the induction voltage differences determined in the first and second energization intervals.

8. The method according to any one of claims 1 to 7, wherein before the first and/or second energization interval, an electrical voltage is applied to the first and second phases (312.1, 312.2) for a respective predetermined period of time, which voltage is opposite to the voltage to be applied for the energization.

9. The method according to claim 8, wherein the predetermined period of time is not longer than 100 ms.

10. A control unit for a three-phase electric motor, **characterized in that**

- the control unit is designed to receive phase voltages measured by a measuring and control circuit of the three-phase electric motor at the phases of the three-phase electric motor and a measured voltage drop across a shunt resistor for measuring individual phase currents and to apply up to three clocked voltages to the three-phase electric motor by means of the measuring and control circuit; and
- to determine an initial rotor position of the three-phase electric motor according to a method according to any one of the preceding claims using the voltage drop received from the measuring and control circuit and the phase voltages received from the measuring and control circuit and through energizing the phases by the measuring and control circuit.

11. A system for determining an initial rotor position of a three-phase electric motor (310), the system comprising:

- a measuring and control circuit (3100); and
- a control unit according to claim 10;

**characterized in that**

- the measuring and control circuit (3100) is designed to measure phase voltages at phases of the three-phase electric motor and a voltage drop across a shunt resistor for measuring individual phase currents through the phases of the three-phase electric motor (310) and to provide them to the control unit and to apply up to three clocked voltages to the three-phase electric motor.

**12.** An electric motor (310) comprising a stator, a system for determining an initial rotor position of a three-phase electric motor (310) according to claim 11 and a rotor, which is rotatable relative to the stator.

**Revendications**

**1.** Procédé de détermination d'une position initiale de rotor d'un moteur électrique triphasé (310) avec un circuit de commande (3100), le procédé comprenant :

- l'alimentation d'une première et d'une deuxième phase (312.1, 312.2) du moteur électrique triphasé (310) avec un courant électrique qui augmente ou diminue au-delà d'un premier intervalle d'alimentation ;
- la détermination d'une tension induite dans une troisième phase (312.3) non alimentée en courant du moteur électrique triphasé (310) à au moins deux points de mesure espacés dans le temps pendant le premier intervalle d'alimentation ;
- la détermination d'une différence de tension d'induction (3700) de la tension induite dans la troisième phase (312.3) entre les deux points de mesure d'induction espacés dans le temps, en tenant compte d'une variation de tension dans le circuit de commande (3100) de la première et/ou de la deuxième phase (312.13312.2) provoquée par l'alimentation de la première et de la deuxième phase dans le premier intervalle d'alimentation ; et
- la détermination de la position initiale du rotor à partir de la différence de tension d'induction (3700) ;

**caractérisé en ce que**

- la prise en compte de la variation de tension provoquée par l'alimentation de la première et de la deuxième phase dans le premier intervalle d'alimentation s'effectue dans le circuit de commande (3100) de la première et/ou de la deuxième phase (312.13312.1, 312.2) sous la forme d'une différence de tension de shunt estimée prédéterminée, ou
- la variation de tension dans le circuit de commande (3100) provoquée par l'alimentation de la première et/ou de la deuxième phase (312.1, 312.2) dans l'intervalle d'alimentation dans le premier et/ou la deuxième phase (312.1, 312.2) correspond à une différence de tension de shunt (3702) qui se produit sur une tension qui descend au-dessus d'une résistance de shunt (R1) pour mesurer le courant de phase dans la première et/ou la deuxième phase (312.1, 312.2) entre deux points de mesure de shunt espacés, et dans lequel la prise en compte de la variation de tension provoquée par l'alimentation de la première et/ou de la deuxième phase (312.1, 312.2) dans l'intervalle d'alimentation dans la première phase et/ou deuxième phase (312.1, 312.2) se produit par le fait que la différence de tension d'induction (3700) est réduite d'une valeur proportionnelle à la différence de tension de shunt (3702).

**2.** Procédé selon la revendication 1, dans lequel l'alimentation est telle que le courant électrique augmente ou diminue de façon strictement monotone et éventuellement de façon linéaire dans le premier intervalle d'alimentation.

**3.** Procédé selon la revendication 1 ou 2, dans lequel les points de mesure d'induction comprennent les premier et second points de mesure d'induction et les points de mesure de shunt comprennent un premier et un second point de mesure de shunt, dans lequel le premier point de mesure d'induction est espacé dans le temps du premier point de mesure de shunt et/ou le second point de mesure d'induction n'est pas espacé dans le temps de plus de 5 $\mu$s du second point de mesure de shunt.

**4.** Procédé selon la revendication 3, dans lequel les premier et second points de mesure d'induction sont espacés d'au moins 10 $\mu$s, optionnellement d'au moins 100 $\mu$s, optionnellement d'au moins 1 ms, et/ou dans lequel les premier et second points de mesure de shunt sont espacés d'au moins 10 $\mu$s, optionnellement d'au moins 100 $\mu$s, optionnellement d'au moins 1 ms.

**5.** Procédé selon l'une quelconque des revendications 1 à 4, dans lequel la prise en compte de la variation de tension de la première et/ou la deuxième phase (312.1, 312.2) provoquée par l'alimentation de la première et/ou de la deuxième phase (312.1, 312.2) dans l'intervalle d'alimentation est effectuée par la réduction de la différence de tension d'induction (3700) à raison d'une valeur proportionnelle à la différence de tension de shunt (3702).

**6.** Procédé selon l'une quelconque des revendications 1 à 5, dans lequel la prise en compte de la variation de tension dans la première et/ou la deuxième phase provoquée par l'alimentation de la première et/ou de la deuxième phase (312.1, 312.2) dans l'intervalle d'alimentation est effectuée par la réduction de la différence de tension d'induction (3700) à raison de la moitié de la valeur de la différence de tension de shunt (3702).

**7.** Procédé selon l'une quelconque des revendications 1 à 6, comprenant en outre :

- l'alimentation de la première et de la deuxième phase (312.1, 312.2) du moteur électrique triphasé (310) avec un courant électrique qui augmente ou diminue au cours d'un second intervalle d'alimentation, dans lequel la direction de tension d'une tension appliquée pour l'alimentation étant opposée à la direction de tension de la tension d'alimentation dans le premier intervalle d'alimentation ;
- la détermination d'une tension induite dans une troisième phase non alimentée en courant du moteur électrique triphasé (310) en au moins deux points de mesure espacés dans le temps pendant le premier intervalle d'alimentation ;
- la détermination de la différence de tension d'induction de la tension induite dans la troisième phase entre les deux points de mesure d'induction espacés dans le temps dans le second intervalle d'alimentation, en tenant compte d'une variation de tension dans le circuit de commande de la première et/ou de la deuxième phase (312.1, 312.2) provoquée par l'alimentation de la première et de la deuxième phase (312.1, 312.2) dans le second intervalle d'alimentation ; et
- la détermination de la position initiale du rotor à partir des différences de tension d'induction déterminées dans le premier et le second intervalles d'alimentation.

**8.** Procédé selon l'une quelconque des revendications 1 à 7, dans lequel, avant le premier et/ou le second intervalle d'alimentation, une tension électrique est appliquée à la première et à la deuxième phases (312.1, 312.2) pendant une durée prédéterminée, respectivement, qui est opposée à la tension à appliquer pour l'alimentation.

**9.** Procédé selon la revendication 8, dans lequel la durée prédéterminée n'est pas supérieure à 100 ms.

**10.** Unité de commande pour un moteur électrique triphasé,
**caractérisée en ce que**

- l'unité de commande est conçue pour recevoir des tensions de phase mesurées par un circuit de mesure et de commande du moteur électrique triphasé aux phases du moteur électrique triphasé et une chute de tension mesurée au-dessus d'une résistance de shunt pour mesurer des courants de phase individuels et pour appliquer au moteur électrique triphasé jusqu'à trois tensions synchronisées au moyen du circuit de mesure et de commande ; et
- en utilisant la chute de tension reçue par le circuit de mesure et de commande et les tensions de phase reçues par le circuit de mesure et de commande et en alimentant les phases par le circuit de mesure et de commande, déterminer une position initiale du rotor du moteur électrique triphasé selon un procédé selon l'une quelconque des revendications précédentes.

**11.** Système de détermination d'une position initiale du rotor d'un moteur électrique triphasé (310), le système comprenant :

- un circuit de mesure et de commande (3100) ; et
- une unité de commande selon la revendication 10 ;

**caractérisé en ce que**

- le circuit de mesure et de commande (3100) est conçu pour mesurer des tensions de phase aux phases du moteur électrique triphasé et une chute de tension au-dessus d'une résistance de shunt pour mesurer des courants de phase individuels à travers les phases du moteur électrique triphasé (310) et pour fournir à l'unité de commande et appliquer jusqu'à trois tensions synchronisées au moteur électrique triphasé.

**12.** Moteur électrique (310) comprenant un stator, un système pour déterminer une position initiale du rotor d'un moteur électrique triphasé (310) selon la revendication 11, et un rotor rotatif par rapport au stator.

Fig. 1A

Fig. 1B

Fig. 1C

Fig. 2A

Fig. 2B

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019127051 A1
- DE 102016123707 A1
- WO 2009047217 A2

- DE 102016123715 A1
- DE 10221385 A1
- DE 10220077 A1